# EUROPÄISCHE PATENTSCHRIFT

(11) **EP 3 224 214 B1**
(45) Veröffentlichungstag und Bekanntmachung des Hinweises auf die Patenterteilung: **29.04.2020**
(21) Anmeldenummer: 15791553.9
(22) Anmeldetag: 02.11.2015
(51) Int. Cl.: C03C 17/00, C03C 17/10, B41J 3/407

(54) **VERFAHREN ZUR HERSTELLUNG EINES REFLEKTORS AUF EINEM REFLEKTOR-BASISKÖRPER AUS GLAS**
METHOD FOR PRODUCING A REFLECTOR ON A REFLECTOR MAIN PART MADE OF GLASS
PROCÉDÉ POUR LA FABRICATION D'UN RÉFLECTEUR SUR UN CORPS DE BASE DE RÉFLECTEUR EN VERRE

(30) Priorität: 24.11.2014 DE 102014117199
(43) Veröffentlichungstag der Anmeldung: 04.10.2017
(73) Patentinhaber: Heraeus Noblelight GmbH, 63450 Hanau (DE)
(72) Erfinder: LINOW, Sven, 64285 Darmstadt (DE); WEBER, Jürgen, 63801 Kleinostheim (DE); BRESSEM, Jörg, 64287 Darmstadt (DE)
(74) Vertreter: Heraeus IP
(86) Internationale Anmeldenummer: PCT/EP2015/075381
(87) Internationale Veröffentlichungsnummer: WO 2016/083078

(56) Entgegenhaltungen:
- EP-A1- 1 806 233
- EP-A2- 0 514 073
- EP-A2- 2 644 392
- DE-U1-202004 011 153

## Beschreibung

Die vorliegende Erfindung betrifft ein Verfahren, gemäß Anspruch 1, zur Herstellung eines Reflektors auf einem Reflektor-Basiskörper aus Glas mit gekrümmter Oberfläche, die im Bereich einer Beschichtungsfläche mit einer metall-, insbesondere edelmetallhaltigen, spiegelnden Reflektorschicht versehen wird, indem eine metallhaltige Beschichtungsflüssigkeit auf der Beschichtungsfläche aufgebracht und bei einer Temperatur unterhalb einer Erweichungstemperatur des Glases einer Einbrennbehandlung unterzogen wird.

Funktionale Schichten aus reflektierenden Metallen werden auf Lampen, Leuchten oder separaten Reflektorbauteilen aufgebracht. Reflektorbauteile sind dabei Elemente, die in Leuchten oder anderen Vorrichtungen, die optische Strahlung reflektieren, eingesetzt werden. Als Reflektormaterial eignen sich aufgrund ihrer Reflektivität je nach Spektralbereich beispielsweise Gold, Silber, Kupfer, Aluminium.

### Stand der Technik

Aus der DE 35 30 873 A1 ist ein gattungsgemäßes Verfahren zur Herstellung eines Scheinwerferreflektors bekannt. Dabei wird auf der konkaven Innenseite eines aus Glas bestehenden Reflektorkörpers mittels Tampondruckverfahren eine etwa 5 µm dicke Schicht aus einer metallhaltigen Paste aufgebracht. Der Reflektorkörper besteht aus Hochtemperaturglas, das einen Erweichungspunkt Tg von etwa 550°C hat. Die Paste besteht aus einer Lösung von Platin- oder Goldresinat in einem Dicköl unter geringen Zusätzen (∼1%) von Resinaten von Glasbildnern zur Haftvermittlung. Der Reflektorkörper mit der aufgebrachten Resinatschicht wird in einem Ofen auf eine Temperatur um 500°C gebracht. Bei dieser Wärmebehandlung zerfällt das Goldresinat in metallisches Gold und Harzsäure, die ihrerseits, wie auch die übrigen Komponenten der Paste, durch die hohe Einbrenntemperatur verflüchtigt werden. Auf dem Reflektorkörper verbleibt eine dünne, metallische Spiegelschicht von etwa 0,1 µm Dicke. Diese ist korrosionsbeständig, so dass eine Lackschicht zum Schutz vor Korrosion nicht notwendig ist.

Beim Tampondruckverfahren wird die Druckpaste mittels eines elastischen Tampon aus Silikonkautschuk von der Druckform auf das Druckobjekt übertragen.

Anstelle dieser Methode sind zur Aufbringung von einbrennbaren Edelmetallresinatschichten zwecks Herstellung von Reflektoren auch Schablonen- oder Siebdruckverfahren gebräuchlich. Beim Siebdruck wird die Druckpaste mit einer Gummirakel durch ein feinmaschiges Gewebe hindurch auf das Druckobjekt aufgebracht, wobei die Maschenöffnungen des Gewebes an Stellen undurchlässig sind, an denen keine Paste durch die Schablone treten soll.

Die oben beschrieben Druckverfahren erfordern die vorherige aufwändige Herstellung einer Druckform oder Schablone zur exakten Übertragung der Druckpaste. Diesen Nachteil vermeiden Auftragsmethoden, bei denen die Paste aufgestrichen oder aufgesprüht wird. Diese Verfahrensweisen für die Herstellung infrarotreflektierender Auskleidungen von IR-Strahlern sowie dafür geeignete Gold- und anderen Edelmetall-Resinatzusammensetzungen sind beispielsweise in der DE-PS 1 540 740 beschrieben.

Bei dieser Methode ist es jedoch schwierig, eine vorgegebene Schichtdicke der edelmetallhaltigen Paste sowie definierte Konturen und Ränder reproduzierbar einzuhalten und kleine Strukturen von weniger als 2 mm zu fertigen. Häufig werden Wülste, ungerade Verläufe, Sprüh- und Tropfartefakte beobachtet, die eine aufwändige Nachbearbeitung erfordern. Verluste der zumeist wertvollen Pasten durch Überdosierung, Abtropfen, Überspritzen, Ausschuss und Nacharbeit führen zu hohen Material kosten.

Insbesondere beim Einsatz von Edelmetall erschwert die Kombination von ungenauer Dosierung, Variation des Verbrauches und hohen Verlusten zudem die Überwachung des Verbleibes von Material. So gelingt nur unbefriedigend, den genauen Verbrauch bestimmten Produkten oder Aufträgen zuzuordnen; auch die Überwachung und Verhinderung von Diebstahl gelingt nur unbefriedigend.

Ein weiteres, ähnliches Verfahren wird in DE-202004011153-U beschrieben.

### Technische Aufgabe

Es ist daher eine Aufgabe der Erfindung ein Verfahren zur Herstellung eines Reflektors auf einer Lampe, einer Leuchte oder einem separaten Reflektorbauteil anzugeben, das es ermöglicht, eine Reflektorschicht mit vorgegebener Schichtdicke reproduzierbar und mit engen Toleranzen aufzubringen sowie ohne Druckform oder dergleichen saubere Kanten zu erzeugen. Insbesondere sollen Edelmetallverluste minimiert und eine enge Überwachung und auftragsbezogene Verfolgung des Materialflusses und die Zuordnung des Verbrauchs zu einzelnen Aufträgen oder Werkstücken erleichtert werden.

### Allgemeine Beschreibung der Erfindung

Diese Aufgabe wird ausgehend von einem Verfahren der eingangs genannten Gattung erfindungsgemäß dadurch gelöst, dass das Aufbringen der Beschichtungsflüssigkeit berührungslos mittels Inkjet-Technik erfolgt, indem die Beschichtungsflüssigkeit einem mit einer Vielzahl von Düsen ausgestatteten und mindestens in einer Bewegungsebene relativ zu der Beschichtungsfläche bewegbaren Druckkopf bewegt und mittels diesem unter Druck und in Form von aus den Düsen auftretenden Tropfen auf die Beschichtungsfläche gespritzt wird.

Beim erfindungsgemäßen Verfahren erfolgt das Auftragen der metallhaltigen Beschichtungsflüssigkeit zur Herstellung der reflektierenden Oberflächenschicht mittels Inkjet-Technik. Dabei wird ein Drucker eingesetzt, der mit einem oder mehreren industriellen Druckköpfen ausgestattet ist, die computer- und programmgesteuert in einer Ebene entlang der Beschichtungsfläche bewegbar und dadurch zumindest positionierbar sind.

Jeder der Druckköpfe ist fluidisch mit einem Reservoir für die Beschichtungsflüssigkeit verbunden und mit einer Vielzahl von Auslassdüsen versehen, die in einer oder mehreren parallelen Reihen verlaufen. Jede der Auslassdüsen ist vorzugsweise einzeln ansteuerbar in dem Sinne, dass die Düsenöffnung geschlossen oder offen ist. Bei einer offenen Düsenöffnung gelangt die metallhaltige Beschichtungsflüssigkeit unter einem vorgebbaren Druck tropfenweise und berührungslos auf die zu beschichtende Oberfläche.

Dabei wird die Beschichtungsfläche relativ zum Druckkopf bewegt. Je nach Geschwindigkeit und Richtung der Relativbewegung und Ansteuerung der Düsen wird der Auftragsprozess so gesteuert, dass die metallhaltige Beschichtungsflüssigkeit in einem vorgegebenen Muster auf die Oberfläche aufgedruckt wird. Dadurch können nicht nur einfache, flächig-geschlossene Schichten aufgetragen werden, sondern es werden auch Strukturen ermöglicht, die beispielsweise aus einzelnen flächigen - sich berührenden oder nicht berührenden - Schichtbereichen aufgebaut sind.

Die Beschichtungsflüssigkeit wird anschließend getrocknet und eingebrannt und dabei in eine spiegelnd reflektierende Reflektorschicht umgewandelt. Beim Einbrennen werden organische Bestandteile durch Oxidation an Luft in Gas umgewandelt, und es kommt zu einer durchgängigen Vernetzung und Ausbildung einer geschlossenen Metallschicht mit guter Haftung zum Glas.

Die Inkjet-Technologie erlaubt einen flexiblen und feingliedrigen Auftrag der Beschichtungsflüssigkeit, so dass vorteilhaft sowohl Strukturen erzeugt werden können, die Teile elektrischer Schaltungen darstellen, oder Strukturen mit graduellen Übergängen zwischen Transmission und Reflexion, oder auch nicht reflektierende Bereiche in einer ansonsten reflektierenden Fläche, die beispielsweise als Fenster zur Einsichtnahme in das Innere einer Lampe dienen.

Beschichtungsfehler, wie sie bei den eingangs genannten Techniken auftreten, werden vermieden; die Vorabfertigung einer Druckmaske, einer Schablone oder einer Druckform ist nicht erforderlich. Ein besonderer Vorteil des Verfahrens liegt darin, dass die zur Herstellung einer Schicht erforderliche Metallmenge so eingestellt werden kann, dass reproduzierbar und nachvollziehbar ein vorgegebenes und ein optimales Ergebnis erzielt wird. Optimales Ergebnis bedeutet dabei eine hohe Reflektivität bei minimalem Materialeinsatz.

Die Beschichtungsflüssigkeit enthält ein Metall oder mehrere Metalle vorzugsweise in elementarer Form.

Dies vereinfacht die Herstellung einer glänzend spiegelnden Oberfläche. Bei einer metallorganischen Tinte liegt das Metall in einer Komplexbindung vor, wie etwa Gold in Komplexen mit Chlorverbindungen. Andere geeignete Metalle sind insbesondere Aluminium, Kupfer oder Silber, je nachdem in welchem Wellenlängenbereich die Reflexion erfolgen soll, oder welche anderen Funktionen der Schicht erwünscht sind, wie etwa eine gute elektrische Leitfähigkeit.

Es hat sich bewährt, wenn die Beschichtungsflüssigkeit eine Viskosität im Bereich von 10 bis 30 mPas aufweist.

Das Fließverhalten dieser Beschichtungsflüssigkeit ist darauf abgestimmt, dass sie
(i) mittels Inkjet-Technik zu drucken ist,
(ii) die glasige, zu beschichtende Oberfläche gut benetzt und
(iii) nicht leicht abläuft oder Tropfen bildet.

Die Relativbewegung zwischen Beschichtungsfläche und Druckkopf erfolgt durch programmgesteuerte Bewegung des Druckkopfes entlang der Beschichtungsfläche oder durch Bewegung der Beschichtungsfläche entlang des Druckkopfes oder durch eine Überlagerung beider Bewegungsarten.

Insbesondere zur Beschichtung langgestreckter, zylindrischer Profile hat es sich bewährt, wenn die Relativbewegung zwischen Beschichtungsfläche und Drucckopf eine Translationsbewegung des Reflektor-Basiskörpers entlang des Drucckopfes umfasst.

Dabei wird das zu beschichtende Bauteil mittels einer Verschiebeinheit, beispielsweise einem Transportband, mit der Beschichtungsfläche, die eine Länge von mehreren Metern haben kann, an dem Druckkopf entlang geführt. Der Drucckopf ist dabei in axialer Richtung feststehend; in Umfangsrichtung und/oder in radialer Richtung kann er bewegbar sein.

Der Reflektor-Basiskörper liegt im einfachsten Fall als Zylinder und die Beschichtungsfläche als Längsstreifen einer sich über einen Teilumfang des Zylinders erstreckenden Mantelfläche vor, wobei der Druckkopf zum Auftrag der Beschichtungsflüssigkeit über einen Teilumfang von 60 Winkelgraden, vorzugsweise für einen Teilumfang von 90 Winkelgraden, ausgelegt ist.

Zum Erzeugen einer Schicht, die 180 Winkelgrade eines Rundprofils abdeckt, werden demnach zwei bis drei Druckköpfe eingesetzt, deren Düsenaustrittsebenen einen Winkel von 90 Grad oder weniger einschließen.

Das Raster der Austrittsdüsen ist in der Regel rechteckig ausgelegt, wobei eine Vielzahl von Düsen in einer Reihe oder in wenigen Reihen angeordnet ist. Der Druckkopf verfügt demnach über eine kurze Seite und eine lange Seite. Dadurch ist es möglich, auch bei runden oder komplex geformten Oberflächen mit kleinen Krümmungsradien (beispielsweise 5 mm) die gewünschte hohe Homogenität der Beschichtung zu gewährleisten sowie saubere, klare und überspritzfreie Kanten zu erzeugen. Zum Bedrucken langgestreckter Profile ist der Druckkopf, beziehungsweise sind die Druckköpfe mit ihrer langen Seite quer zur Längsachsenrichtung des Profils angeordnet.

Dabei hat es sich bewährt, wenn der zu beschichtende Längsstreifen eine Breite im Bereich von 20 bis 65 mm aufweist.

Der Reflektorbasiskörper ist als Lampenkolben eines Infrarotstrahlers ausgebildet. Er ist beispielsweise als Rohr mit rundem, ovalem oder polygonalem Querschnitt ausgeführt oder in einer Sonderformen, wie als sogenanntes Zwillingsrohr. Er besteht bevorzugt aus Quarzglas oder Borosilikatglas.

Es wird eine Verfahrensweise bevorzugt, bei der die Düsen in einer gemeinsamen Austrittsebene verlaufende Austrittsöffnungen haben, wobei zwischen der Austrittsebene und der Beschichtungsfläche ein Abstand im Bereich von 5 bis 10 mm eingestellt wird.

Durch Einhalten eines Abstandes in diesem Bereich kann ein Übersprühen der Beschichtungsflüssigkeit auch bei gekrümmten Oberflächen weitgehend vermieden werden.

Weiterhin hat es sich als günstig erwiesen, wenn eine Minimalbelegung der Beschichtungsfläche mit der Beschichtungsflüssigkeit errechnet und das Aufbringen der Beschichtungsflüssigkeit programmgesteuert so erfolgt, dass eine Oberflächenbelegung erzeugt wird, die im Wesentlichen der Minimalbelegung entspricht.

Das Auftragen der Beschichtungsflüssigkeit wird dabei so gesteuert, dass das Metall eine gleichmäßige Oberflächenbelegung erfährt, wobei die Oberflächenbelegung im Minimum bereits das Optimum aus minimaler Transmission und Materialkosten für die spätere Reflektor-Schicht nach der noch vorzunehmenden Umwandlung vorwegnimmt.

Die Schichtdicke der Beschichtungsflüssigkeit auf dem Glas liegt vorzugsweise im Bereich zwischen 20 µm und 40 µm. Die Schichtdicke kann beispielsweise durch Auswertung des Durchflusses der einzelnen Düsen (durch Zählen der Tropfen) und Messung der belegten Fläche ermittelt werden. Der Metallanteil der Schicht liegt typischerweise im Bereich von 10 bis 15 Gew.-%.

Die daraus durch Einbrennen erzeugte Reflektorschicht hat bevorzugt eine Solldicke im Bereich von 50 nm bis 200 nm. Die Gleichmäßigkeit der Schichtdicke zeigt sich darin, dass eine an fünf über der Reflektorschicht gleichmäßig verteilten Messstellen gemessene Dicke um maximal 10 % von der Solldicke abweicht

Die Dicke der metallischen Schicht kann aus der Schichtdicke der ursprünglichen Beschichtungsflüssigkeitsschicht und dem bekannten Volumenanteil der metallischen Bestandteile der Beschichtungsflüssigkeit bestimmt werden. Alternativ oder ergänzend dazu kann sie auch durch Absputtern oder Transmission von extrem kurzwelliger Strahlung (Röntgen- oder Gammastrahlung) bestimmt werden.

### Ausführungsbeispiel

Nachfolgend wird die Erfindung anhand von Ausführungsbeispielen und eine Zeichnung näher beschrieben. Dabei zeigt im Einzelnen in schematischer Darstellung:
- **Figur 1**: eine Ausführungsform des erfindungsgemäß hergestellten Reflektors als partielle Reflektorschicht auf einem Infrarot-Lampenrohr zusammen mit einem Druckkopf in einem Längsschnitt, und
- **Figur 2**: die Reflektorschicht mit Druckkopf von Figur 1 im axialen Querschnitt entlang der Linie A in vergrößerter Darstellung.

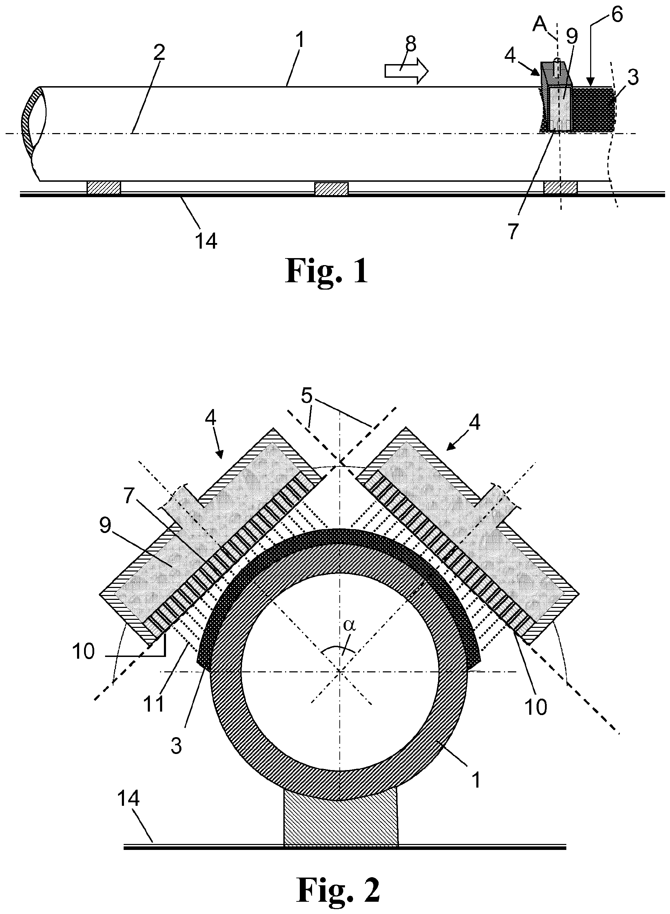

**Figur 1** zeigt schematisch ein horizontal orientiertes Lampenrohr 1 aus Quarzglas mit einer Lampenrohr-Mittelachse 2, entlang der eine teilumfängliche Beschichtung mit einer goldhaltigen Reflektorschicht 3 aufgedruckt wird. **Figur 2** zeigt eine Ansicht des Lampenrohres 1 in einem Schnitt A senkrecht zur Längsachse 2 in vergrößerter Darstellung. Beide Darstellungen sind nicht maßstäblich; insbesondere ist die Dicke der Tintenschicht 3 aus Gründen der besseren Erkennbarkeit überaus dick dargestellt.

Für jeden neuen Druckprozess wird zunächst ein Rezept erstellt, das
(i) die geometrischen Form des zu bedruckenden Glasprofils und der Beschichtungskontur und
(ii) die Strahlcharakteristik des Druckkopfes berücksichtigt.

### Glasprofil und Beschichtungskontur

Der Außenmantel des Lampenrohres 1 mit einem Außendurchmesser von 19 mm soll über eine Länge von 1000 mm und über einen Umfangswinkel von 180 Grad mit einer spiegelnd reflektierenden Goldschicht einer Dicke von 200 nm bedruckt werden.

### Druckvorrichtung

Der dafür eingesetzte Drucker verfügt über zwei baugleiche, beheizbare Druccköpfe 4, die entlang eines Halbbogens 12 (in Figur 2 mittels gestrichelter Linie angedeutet) verschiebbar sind. Dies sind um die obere Umfangshälfte des Lampenrohres 1 gleichmäßig verteilt und in einem Winkel α von 90 Grad zueinander angeordnet.

Die maximale Druckbreite eines Druckkopfes beträgt 65 mm. Beide Druckköpfe 4 sind mit einer Anzahl von 1024 Druckzellen bestückt, die in einem regelmäßigen 2 x 512-Raster angeordnet sind. Jede Druckzelle verfügt über eine TintenAuslassdüse 7, die über Zufuhrkanäle mit einem ebenfalls beheizbaren Druckmittel-Vorratsbehälter verbunden sind. Jede Druckzelle ist mit einem Piezoelement ausgestattet, mittels dem die Tintenauslassdüse 7 je nach Bedarf geöffnet und geschlossen werden kann. Für die getrennte Ansteuerung der Druckzellen und für die Bewegungssteuerung des Druckkopfes in einer vorgegebenen Bewegungsebene ist ein Mikrorechner vorgesehen.

### Drucktinte

Es wird eine handelsübliche, metallorganische goldhaltige Tinte verwendet, bei der in einer Lösung aus n-Heptan, Terpentinöl, Ethanol und Ethylencarbonat 15 Gew.-% elementares Gold in einem organischen Komplex gelöst sind.

Diese Tinte ist darauf abgestimmt, dass sie einerseits mittels Inkjet-Technik druckbar ist, die glasige Lampenoberfläche gut benetzt und nicht leicht abläuft oder Tropfen bildet. Ihre Viskosität wird über die Temperatur der Druckkopfheizung und der Vorratsspeicherheizung eingestellt.

### Druckprozess

Vorab wird die Belegung der zu beschichtenden Oberfläche mit der Tinte errechnet, die erforderlich ist, um eine vorgegebene Mindest-Reflexion bei möglichst geringer Schichtdicke der endgültigen Reflektorschicht zu erzeugen (=Minimalbelegung). Die Mindest-Reflexion liegt typischerweise bei mehr als 90%, ermittelt anhand der Norm IEC 62798 ("Test method for infrared emitters"). Die Tinte wird programmgesteuert so aufgetragen, dass eine Oberflächenbelegung gemäß der Minimalbelegung erzeugt wird.

Diese Schichtdicke liegt je nach Anforderung an den Reflexionsgrad im Bereich von 50 nm bis 200 nm. Die benötigte Dicke der flüssigen Beschichtungsmittelschicht und der Verbrauch an Beschichtungsmittel werden anhand des Goldanteils des Beschichtungsmittels und durch Auswertung des Durchflusses der einzelnen Auslassdüsen (durch Zählen der Tropfen) und Messung der belegten Fläche ermittelt.

Die Heiztemperatur wird auf 35 °C eingestellt und damit die Viskosität des Druckmittels vorgegeben. Dabei nimmt jeder Tropfen ein Volumen von 35 pl (picoliter) ein. Der Tropfendurchmesser der aus den Austrittsdüsen austretenden Tintentropfen wird dadurch auf etwa 100 µm eingestellt. Die Austrittöffnungen der Düsen 7 eines Druckkopfes 4 liegen in einer gemeinsamen Austrittsebene 5. Der Abstand zwischen der Austrittsebene 5 und der Beschichtungsfläche 6 variiert von Düse zu Düse, wird aber während des Druckprozesses konstant gehalten. Im Mittel beträgt er etwa 1 mm so dass sich ein mittlerer Auftreffabstand der Tropfen von etwa 35 µm ergibt. Die Druckfrequenz liegt bei 5 kHz (5000 Tropfen/s).

Das Lampenrohr 1 wird mittels eines Transportbandes 14 in einem vorgegebenen Abstand von etwa 1 mm unter den feststehenden Druckköpfen 4 programmgesteuert hindurchgeführt. Dabei tritt die goldhaltige Tinte 9 in Form der feinen Tröpfchen 11 (siehe Figur 2) aus den Düsen 7 aus und wird innerhalb des vorgegebenen Umfangswinkels von 180 Grad (siehe Figur 2) auf die Oberfläche des Lampenrohres 1 aufgedruckt.

Für die Erzeugung der gewünschten Schichtstärke genügt ein einziger Schichtauftrag. Die Tintenschicht 3 bildet einen Längsstreifen, der sich entlang der Mittelachse über einen Umfangswinkel von180 Grad der Lampenrohr-Mantelfläche erstreckt. Jeder der beiden Druckköpfe 4 ist zum Auftrag einer Teilbeschichtung über einen Teilumfang von 90 Winkelgraden ausgelegt, wobei gewährleistet wird, dass die Teilbeschichtungen anstoßen oder überlappen. Dabei können mehrere der beiderseits äußeren Düsen 10 des 2 x 512 Rasters, die den größten Abstand zur Beschichtungsfläche 6 haben, abgeschaltet werden.

Die Schicht 3 wird während des Druckprozesses erwärmt und dadurch leicht angetrocknet. Nach Erreichen der nominalen Dicke wird die getrocknete Tintenschicht 3 durch Erhitzen auf 700°C an Luft eingebrannt und dabei in eine spiegelnd reflektierende Reflektorschicht umgewandelt. Dabei werden die organischen Bestandteile oxidiert oder vergast, und es kommt zu einer durchgängigen Vernetzung und Ausbildung einer geschlossenen Metallschicht mit guter Haftung zum Glas des Lampenrohres 1.

Die erzeugte goldhaltige Reflektorschicht hat eine nominale Dicke von 200 nm. Die Gleichmäßigkeit der Schichtdicke zeigt sich darin, dass eine an fünf gleichmäßig verteilten Messstellen gemessene Dicke um maximal 20 nm von der Solldicke abweicht.

Diese Schicht hat ein Gewicht von 0,75 g (pro Rohrmeter) an Beschichtungsmittel mit einem Nominalgehalt an reinem Gold von 0,12 g; der tatsächliche Verbrauch liegt bei 0,13 g und damit nur etwa 8% über dem theoretischen Wert.

Die Haftung wird mittels eines sogenannten "Tape-Abzugstests" bestimmt. Ausreichende Haftung ist gegeben, wenn nach Aufkleben eines Klebebandes und unmittelbarem Abziehen desselben mit bloßem Auge keine metallischen Spuren auf dem Tape erkennbar sind.

Das erfindungsgemäße Druckverfahren ist zwar optimiert für das Bedrucken strangförmiger Glasprofile. Im selben Druckprozess und mittels der gleichen Druckvorrichtung werden jedoch ergänzend im Bereich des einen Endes des Lampenrohres 1 Leitungen für eine elektrische Schaltung aufgedruckt, die Bestandteil eines Temperatursensors bilden, mittels dem der Betriebszustand der Lampe erfasst werden kann.

## Patentansprüche

1. Verfahren zur Herstellung eines Reflektors auf einem als Lampenkolben eines Infrarotstrahlers ausgebildeten Reflektor-Basiskörper (1) aus Glas mit gekrümmter Oberfläche, die im Bereich einer Beschichtungsfläche mit einer metall-, insbesondere edelmetallhaltigen, spiegelnden Reflektorschicht (3) versehen wird, indem eine metallhaltige Beschichtungsflüssigkeit (9) auf der Beschichtungsfläche (6) aufgebracht und bei einer Temperatur unterhalb einer Erweichungstemperatur des Glases einer Einbrennbehandlung unter Bildung der Reflektorschicht (3) unterzogen wird, **dadurch gekennzeichnet, dass** das Aufbringen der Beschichtungsflüssigkeit berührungslos mittels Inkjet-Technik erfolgt, indem die Beschichtungsflüssigkeit (9) mit einem mit einer Vielzahl von Düsen (7) ausgestatteten und mindestens in einer Bewegungsebene (8) relativ zu der Beschichtungsfläche bewegbaren Druckkopf (4) bewegt und mittels diesem unter Druck und in Form von aus den Düsen (7) austretenden Tropfen (11) auf die Beschichtungsfläche (6) gespritzt wird.

2. Verfahren nach Anspruch 1, **dadurch gekennzeichnet, dass** die Beschichtungsflüssigkeit (9) das Metall in elementarer Form enthält.

3. Verfahren nach Anspruch 1 oder 2, **dadurch gekennzeichnet, dass** die Beschichtungsflüssigkeit (9) eine Viskosität im Bereich von 10 bis 30 mPa·s aufweist.

4. Verfahren nach einem der vorhergehenden Ansprüche, **dadurch gekennzeichnet, dass** die Relativbewegung zwischen Beschichtungsfläche (6) und Druckkopf (4) eine Translationsbewegung des Reflektor-Basiskörpers entlang des Druckkopfes (4) umfasst.

5. Verfahren nach einem der vorhergehenden Ansprüche, **dadurch gekennzeichnet, dass** der Reflektor-Basiskörper (1) als Zylinder und die Beschichtungsfläche (6) als Längsstreifen einer sich über einen Teilumfang des Zylinders erstreckenden Mantelfläche vorliegen, wobei der Druckkopf (4) zum Auftrag der Beschichtungsflüssigkeit (9) über einen Teilumfang des Zylinders von 60 Winkelgraden, vorzugsweise für einen Teilumfang des Zylinders von 90 Winkelgraden, ausgelegt ist.

6. Verfahren nach Anspruch 6, **dadurch gekennzeichnet, dass** der Längsstreifen eine Breite im Bereich von 20 bis 65 mm aufweist.

7. Verfahren nach einem der vorhergehenden Ansprüche, **dadurch gekennzeichnet, dass** die Düsen (7) in einer gemeinsamen Austrittsebene (5) verlaufende Austrittsöffnungen haben und dass zwischen der Austrittsebene (5) und der Beschichtungsfläche (6) ein Abstand im Bereich von 5 bis 10 mm eingestellt wird.

8. Verfahren nach einem der vorhergehenden Ansprüche, **dadurch gekennzeichnet, dass** eine Reflektorschicht (3) erzeugt wird, deren Solldicke im Bereich von 50 nm bis 200 nm liegt, wobei eine an fünf über der Reflektorschicht (3) verteilten Messstellen gemessene Dicke um maximal 10 % von der Solldicke abweicht

9. Verfahren nach einem der vorhergehenden Ansprüche, **dadurch gekennzeichnet, dass** die Beschichtungsflüssigkeit (9) in einer Struktur aufgetragen wird, die nach dem Einbrennvorgang Übergänge zwischen Transmission und Reflexion erzeugt.

10. Verfahren nach einem der vorhergehenden Ansprüche, **dadurch gekennzeichnet, dass** zwei bis drei Druckköpfe (4) eingesetzt werden, deren Düsenaustrittsebenen einen Winkel von 90 Grad oder weniger einschließen.

11. Verfahren nach einem der vorhergehenden Ansprüche, **dadurch gekennzeichnet, dass** jeder Druckkopf (4) aus einem Reservoir mit derselben metallhaltigen Beschichtungsflüssigkeit (9) versorgt wird.

## Claims

1. A method for producing a reflector on a reflector base body (1), which is made of glass and which is formed as lamp bulb of an infrared radiator, comprising a curved surface, which, in the area of a coating surface, is provided with a metal-containing, in particular precious metal-containing, reflective reflector layer (3), in that a metal-containing coating liquid (9) is applied to the coating surface (6) and is subjected to a burn-in treatment by forming the reflector layer (3) at a temperature below a softening temperature of the glass, **characterised in that** the application of the coating liquid takes place in a contact-free manner by means of inkjet technology, **in that** the coating liquid (9) is moved with a print head (4), which is equipped with a plurality of nozzles (7) and which can be moved relative to the coating surface at least in a movement plane (8), and is sprayed by means of said print head onto the coating surface (6) under pressure and in the form of drops (11) exiting the nozzles (7).

2. The method according to claim 1, **characterised in that** the coating liquid (9) contains the metal in elemental form.

3. The method according to Claim 1 or 2, **characterised in that** the coating liquid (9) has a viscosity in the range of 10 to 30 mPa·s.

4. The method according to any one of the preceding claims, **characterised in that** the relative movement between coating surface (6) and print head (4) comprises a translatory motion of the reflector base body along the print head (4).

5. The method according to any one of the preceding claims, **characterised in that** the reflector base body (1) is present as cylinder and the coating surface (6) as longitudinal strip of a jacket surface extending over a partial circumference of the cylinder, wherein the print head (4) is designed for application of the coating liquid (9) over a partial circumference of the cylinder of 60 angular degrees, preferably for a partial circumference of the cylinder of 90 angular degrees.

6. The method according to Claim 6, **characterised in that** the longitudinal strip has a width in the range of 20 to 65 mm.

7. The method according to any one of the preceding claims, **characterised in that** the nozzles (7) have exit openings running in a common exit plane (5) and that a distance in the range of 5 to 10 mm is set between the exit plane (5) and the coating surface (6).

8. The method according to any one of the preceding claims, **characterised in that** a reflector layer (3) is generated, the desired thickness of which lies in the range of 50 nm to 200 nm, wherein a thickness measured at five measuring points distributed above the reflector layer (3) differs by maximally 10% from the desired thickness.

9. The method according to any one of the preceding claims, **characterised in that** the coating liquid (9) is applied in a structure, which generates transitions between the transmission and reflection after the burn-in process.

10. The method according to any one of the preceding claims, **characterised in that** two to three print heads (4) are used, the nozzle exit planes of which draw an angle of 90 degrees or less.

11. The method according to any one of the preceding claims, **characterised in that** each print head (4) is supplied with the same metal-containing coating liquid (9) from a reservoir.

## Revendications

1. Procédé pour la fabrication d'un réflecteur sur un corps de base de réflecteur (1) en verre, conçu comme ampoule de lampe d'un émetteur infrarouge, avec une surface incurvée qui est munie d'une couche réfléchissante (3) spéculaire, contenant du métal, en particulier des métaux nobles, dans la zone d'une surface d'enduction, moyennant quoi un liquide de couchage (9) contenant du métal est appliqué sur la surface d'enduction (6) et est soumis, à une température inférieure à une température de ramollissement du gaz, à un traitement de cuisson avec formation de la couche réfléchissante (3), **caractérisé en ce que** l'application du liquide de couchage s'opère sans contact au moyen de la technique à jet d'encre, moyennant quoi le liquide de couchage (9) est déplacée avec une tête d'impression (4) équipée d'un nombre de buses (7) et déplaçable au moins dans un niveau de mouvement (8) par rapport à la surface d'enduction et est pulvérisé sur la surface d'enduction (6) sous pression et sous forme de gouttes (11) s'échappant des buses (7) au moyen de la tête d'impression.

2. Procédé conformément à la revendication 1, **caractérisé en ce que** le liquide de couchage (9) contient le métal sous forme élémentaire.

3. Procédé conformément à la revendication n°1 ou n°2, **caractérisé en ce que** le liquide de couchage (9) présente une viscosité comprise entre 10 et 30 mPa s.

4. Procédé conformément à l'une des revendications précédentes, **caractérisé en ce que** le mouvement relatif entre la surface d'enduction (6) et la tête d'impression (4) comprend un mouvement de translation du corps de base de réflecteur le long de la tête d'impression (4).

5. Procédé conformément à l'une des revendications précédentes, **caractérisé en ce que** le corps de base de réflecteur (1) est présent sous forme de cylindre et la surface d'enduction (6) sous forme de bande longitudinale d'une surface enveloppante s'étendant sur une périphérie partielle du cylindre, la tête d'impression (4) étant conçue pour l'application du liquide de couchage (6) sur une périphérie partielle du cylindre de 60 degrés d'angle, de préférence pour une périphérie partielle du cylindre de 90 degrés d'angle.

6. Procédé conformément à la revendication n°6, **caractérisé en ce que** la bande longitudinale présente une largeur comprise entre 20 et 65 mm.

7. Procédé conformément à l'une des revendications précédentes, **caractérisé en ce que** les buses (7) possèdent des orifices de sortie s'étendant dans un niveau de sortie (5) commun et **en ce qu'**une distance comprise entre 5 et 10 mm est définie entre le niveau de sortie (5) et la surface d'enduction (6).

8. Procédé conformément à l'une des revendications précédentes, **caractérisé en ce qu'**une couche réfléchissante (3), dont l'épaisseur théorique est comprise entre 50 nm et 200 nm, est générée, une épaisseur mesurée sur cinq points de mesure répartis au-dessus de la couche réfléchissante (3) divergeant de maximum 10% par rapport à l'épaisseur théorique.

9. Procédé conformément à l'une des revendications précédentes, **caractérisé en ce que** le liquide de couchage (9) est appliqué dans une structure qui génère des transitions entre la transmission et la réflexion après le processus de cuisson.

10. Procédé conformément à l'une des revendications précédentes, **caractérisé en ce que** deux à trois têtes d'impression (4), dont les niveaux de sortie des buses comprennent un angle de 90 degrés ou moins, sont utilisées.

11. Procédé conformément à l'une des revendications précédentes, **caractérisé en ce que** chaque tête d'impression (4) est alimentée depuis un réservoir contenant le même liquide de couchage (9) contenant du métal.
